# EUROPÄISCHE PATENTSCHRIFT

(11) **EP 4 591 292 B1**
(45) Veröffentlichungstag und Bekanntmachung des Hinweises auf die Patenterteilung: **26.08.2026**
(21) Anmeldenummer: 23768285.1
(22) Anmeldetag: 08.09.2023
(51) Int. Cl.: G06V 20/59, G06F 3/01

(54) **VERFAHREN ZUM DURCHFÜHREN EINES TRACKING-VERFAHRENS FÜR MEHRERE DATENBRILLEN IN EINEM INNENRAUM EINES FAHRZEUGS**
METHOD FOR PERFORMING A TRACKING PROCEDURE FOR MULTIPLE SMART GLASSES IN AN INTERIOR OF A VEHICLE
MÉTHODE POUR L'EXÉCUTION D'UNE PROCÉDURE DE SUIVI POUR PLUSIEURS VERRES INTELLIGENTS DANS L'INTÉRIEUR D'UN VÉHICULE

(30) Priorität: 21.09.2022 DE 102022124275
(43) Veröffentlichungstag der Anmeldung: 30.07.2025
(73) Patentinhaber: Bayerische Motoren Werke Aktiengesellschaft, 80809 München (DE)
(72) Erfinder: BAUERNFEIND, Tobias, 81371 München (DE); KEIM, Alan, 80997 München (DE); PAULI, Manfred, 84079 Bruckberg (DE); HABERL, Wolfgang, 81547 München (DE)
(86) Internationale Anmeldenummer: PCT/EP2023/074725
(87) Internationale Veröffentlichungsnummer: WO 2024/061653

(56) Entgegenhaltungen:
- DE-A1- 102019 112 189
- DE-A1- 102020 129 068
- US-A1- 2022 113 546

## Beschreibung

Die Erfindung betrifft Datenbrillen, und insbesondere die Nutzung von Datenbrillen in einem Innenraum eines Fahrzeugs. Die Erfindung betrifft weiterhin das Durchführen von Tracking-Verfahren zur Bestimmung einer Pose einer Datenbrille, insbesondere zur Nutzung für eine kontaktanaloge Anzeige von Anzeigeinhalten in einer Datenbrille.

Es sind Datenbrillen, auch Head-mounted Displays genannt, bekannt, die mithilfe einer Anzeigevorrichtung eine Abbildung auf einer oder zwei Anzeigeflächen im Blickfeld des Trägers der Datenbrille anzeigen können. Bei sogenannten Augmented-Reality-Datenbrillen können die Anzeigeflächen Reflexionsflächen entsprechen, die Abbildungen in das Auge des Trägers der Datenbrille richten. Die Sichtöffnungen der Datenbrille sind transparent, so dass durch die Datenbrille die reale Umgebung in gewöhnlicher Weise wahrgenommen werden kann. Die Anzeigeflächen liegen in den Sichtöffnungen, so dass eine anzuzeigende Information, wie beispielsweise Text, Symbole, Graphiken, Videoanzeigen und dergleichen, die Wahrnehmung der Umgebung überlagernd angezeigt werden kann.

Die Informationen werden dem Träger der Datenbrille in der Regel als Informationsobjekte kontaktanalog dargestellt, d.h. so dargestellt, dass diese Informationsobjekte einem bestimmten zugeordneten Objekt in der Realumgebung überlagert ist bzw. an diesem orientiert ist oder dass das anzuzeigende Informationsobjekt in einer bestimmten Ausrichtung der Datenbrille bzw. deren Trägers angezeigt wird.

Um die Informationsobjekte entsprechend kontaktanalog auf den Anzeigeflächen der Datenbrille anzuzeigen, ist es notwendig, die Position des Objektes in der Umgebung und die Blickrichtung des Benutzers zu kennen. Die Blickrichtung des Benutzers ist beim Tragen der Datenbrille fest deren Pose zugeordnet, d.h. der 3D-Position als auch die 3D-Ausrichtung der Datenbrille.

Die Brillenpose der Datenbrille kann durch eine externe Posenerkennungseinrichtung bestimmt werden, bei der eine Innenraumkamera auf den Kopf des Trägers der Datenbrille und die Datenbrille gerichtet ist und durch Auswertung des Kamerabildes die Brillenpose der Datenbrille ermittelt. Die Innenraumkamera ist in der Regel eine Infrarotkamera, um auch bei schlechten Lichtverhältnissen eine gute Erfassung des Bereichs der Datenbrille zu ermöglichen. Ein solches Tracking-Verfahren wird Outside-in-Tracking genannt und basiert in der Regel auf einem datenbasierten Posenerkennungsmodell, das als datenbasiertes Muster bzw. Objekterkennungsmodell ausgebildet ist.

Das Posenerkennungsmodell kann in an sich bekannter Weise als künstliches neuronales Netz oder dergleichen ausgebildet sein und trainiert sein, ein oder mehrere Kamerabilder, auf dem/denen eine Datenbrille dargestellt wird, mithilfe eines an sich bekannten Mustererkennungsverfahrens einer Brillenpose zuzuordnen. Die Brillenpose weist einen Bezug zu einem Fahrzeugkoordinatensystem auf, das als Referenzbezugssystem gilt. Diese Brillenpose wird anschließend an die Datenbrille übermittelt, so dass eine kontaktanaloge Anzeige eines Informationsobjekts vorgenommen werden kann. Diesbezüglich wird die von brillenextern bereitgestellte Brillenpose häufig mithilfe einer Sensordatenfusion mit Erfassungen von brilleninternen Bewegungssensoren verbessert, um eine möglichst latenzfreie Brillenposeninformation in der Datenbrille zur Verfügung zu stellen.

Datenbrillen werden derzeit von verschiedenen Herstellern angeboten und weisen unterschiedliche Rahmenformen auf. Um Datenbrillen unabhängig von ihrer Bauweise für die Durchführung eines Outside-In Tracking-Verfahrens in einem Fahrzeug zu verwenden, ist es notwendig, dass die Innenraumkamera die Datenbrille erfasst und diese mithilfe eines Mustererkennungsverfahrens oder dergleichen erkannt wird, um deren Pose zu bestimmen.

Bislang beruht das Outside-In Tracking-Verfahren auf einer Innenraumkamera, die auf eine Eyebox, d. h. der Bereich, in dem sich das Augenpaar eines Fahrzeuginsassen vorwiegend befindet, ausgerichtet ist. Das Kamerabild dient dann gleichzeitig als Suchbereich für das Posenerkennungsmodell, mit dem die Pose der Datenbrille erkannt werden kann. Das Posenerkennungsmodell kann datenbasiert ausgebildet sein und in Form eines neuronalen Netzes oder dergleichen ausgebildet sein oder ein solches umfassen.

Im Laufe der zunehmenden Nutzung von Datenbrillen in Fahrzeugen ist abzusehen, dass auch mehrere Datenbrillen in einem Fahrzeug von mehreren Fahrzeuginsassen genutzt werden können. Dazu muss bislang für jede entsprechende Eyebox eine eigene Innenraumkamera vorgesehen werden, die entsprechend ausgerichtet ist.

Die Druckschrift US 2022/113546A1 offenbart ein System zum Erfassen einer räumlichen Orientierung einer tragbaren Vorrichtung, umfassend wenigstens eine Erfassungseinheit, die eingerichtet ist, um wenigstens einen ersten Positionsparameter in Bezug auf die tragbare Vorrichtung zu erfassen; und wenigstens einen zweiten Positionsparameter in Bezug auf ein Körperteil einer Person, an dem die tragbare Vorrichtung angeordnet ist, zu erfassen; und wenigstens eine Prozessoreinheit, die eingerichtet ist, um eine räumliche Orientierung der tragbaren Vorrichtung basierend auf dem wenigstens einen ersten Positionsparameter und dem wenigstens einen zweiten Positionsparameter zu bestimmen.

Die Druckschrift DE 10 2019 112 189 A1 offenbart ein Verfahren zum Betreiben eines Anzeigesystems mit einer Datenbrille, wobei auf einer Anzeigefläche der Datenbrille kontaktanaloge Informationsobjekte abhängig von einer Kopfpose und nicht-kontaktanaloge Informationsobjekte darstellbar sind; mit folgenden Schritten: Bereitstellen einer Objektinformation zur Angabe mindestens eines in der Datenbrille nicht-kontaktanalog darzustellenden Informationsobjekts; und Anzeigen des mindestens einen nicht-kontaktanalog darzustellenden Informationsobjekts auf der Anzeigefläche abhängig von einer seitlichen Kopfneigung.

Die Druckschrift DE 10 2020 129 068 A1 offenbart ein Verfahren zum Ermitteln einer Einbaupose einer Brillen-Inertialsensorik in einer Datenbrille zur Verwendung in einem technischen System, insbesondere in einem Kraftfahrzeug, mit folgenden Schritten: Ermitteln einer Brillenpose der Datenbrille mithilfe einer brillenexternen bildgebenden Einrichtung in einem Assistenzsystem; Brillenexternes Erfassen einer ortsfesten Bewegungsangabe einer translatorischen und/oder rotatorischen Beschleunigung der bildgebenden Einrichtung in einem ortsfesten Koordinatensystem; Erfassen einer BrillenBewegungsangabe einer translatorischen und/oder rotatorischen Bewegung in Raumrichtung durch die Brillen-Inertialsensorik in der Datenbrille; und Ermitteln der Einbaupose der Brillen-Inertialsensorik in der Datenbrille abhängig von der Brillenpose, der ortsfesten Bewegungsangabe und der Brillenbewegungsangabe.

Es ist Aufgabe der vorliegenden Erfindung, das Tracking von mehreren Datenbrillen in einem Fahrzeug zu vereinfachen und insbesondere den baulichen Aufwand hierfür zu reduzieren.

Diese Aufgabe wird durch das Verfahren zum Betreiben eines Outside-In Tracking-Verfahrens für mindestens eine Datenbrille in einem Fahrzeug gemäß Anspruch 1 sowie durch die Anordnung zum Bestimmen von Brillenposen von mindestens einer Datenbrille in einem Fahrzeug gemäß dem nebengeordneten Anspruch gelöst.

Weitere Ausgestaltungen sind in den abhängigen Ansprüchen angegeben.

Gemäß einem ersten Aspekt ist ein Verfahren zum Outside-In-Tracking von mindestens einer Datenbrille in einem Innenraum eines Fahrzeugs zum Bestimmen der Brillenposen der mindestens einen Datenbrille vorgesehen, umfassend:
- Erfassen eines Kamerabilds des Innenraums, so dass Fahrzeuginsassen auf allen Sitzplätzen des Fahrzeugs erfasst werden oder erfassbar sind,
- Auswerten des Kamerabilds mithilfe eines datenbasierten Brillenerkennungsmodells, um alle der mindestens einen Datenbrille in dem Innenraum zu erfassen, wobei das datenbasierte Brillenerkennungsmodell trainiert ist, um für jeden Sitzplatz einen Brillentyp zu erkennen, wenn ein auf dem Sitzplatz befindlicher Fahrzeuginsasse eine Datenbrille trägt;
- Bereitstellen von Geometriedaten der betreffenden mindestens einen Datenbrille, insbesondere von einer Datenbank, basierend auf dem Brillentyp;
- Bestimmen der Brillenpose der erkannten mindestens einen Datenbrille mithilfe eines datenbasierten oder merkmalsbasierten Posenerkennungsmodells abhängig von den jeweiligen Geometriedaten der erkannten mindestens einen Datenbrille;
- Bereitstellen der bestimmten Brillenpose(n) an die jeweils erkannte mindestens eine Datenbrille.

Die Idee des obigen Verfahrens besteht darin, dass eine einzige Innenraumkamera vorgesehen wird, die als eine Weitwinkelkamera vorgesehen ist, die den gesamten Innenraum abdeckt und insbesondere alle Eyeboxen von Fahrzeuginsassen erfasst. Insbesondere kann die Weitwinkel-Innenraumkamera die Eyeboxen von den beiden vorderen (äußeren) und beiden hinteren (äußeren) Sitzplätzen eines herkömmlichen Personenkraftfahrzeugs erfassen.

Insbesondere kann dazu die Weitwinkel-Innenraumkamera in einem vorderen Bereich, d. h. in Längsrichtung vor den vorderen Sitzplätzen eines Fahrzeugs, und in einem oberen Bereich, d. h. unmittelbar unter dem Dachhimmel, beispielsweise im Bereich des Innenspiegels, angeordnet sein.

Das Verfahren zum Betreiben des Outside-In Tracking-Verfahrens sieht dazu vor, zunächst die gesamte Szene des Innenraums des Fahrzeugs mithilfe der Weitwinkelkamera als Kamerabild zu erfassen.

Mithilfe des datenbasierten Brillenerkennungsmodells kann das Vorhandensein einer oder mehrerer Datenbrillen in dem Kamerabild erkannt werden und die Sitzplatzpositionen der Träger der entsprechenden Datenbrillen erkannt werden.

Alternativ kann mithilfe eines zweistufigen Verfahrens zunächst die Sitzplatzbelegung mithilfe eines datenbasierten Belegterkennungsmodells erkannt werden. Die Sitzplatzbelegung kann mithilfe eines an sich bekannten Mustererkennungsverfahrens erkannt werden, das in dem Kamerabild des Innenraums Personen erkennt und anhand der Position auf dem Kamerabild die Sitzplatzbelegung durch die Personen bestimmt. Mithilfe eines weiteren insbesondere datenbasierten Brillenerkennungsmodells kann erkannt werden, welche der Fahrzeuginsassen eine Datenbrille tragen.

Der Bereich bzw. die Bereiche der erkannten Datenbrillen dienen nun für ein nachfolgendes weiteres Suchverfahren als Suchfenster, so dass innerhalb des/der Suchfenster(s) das Brillenmodell klassifiziert werden kann.

Ist das Brillenmodell klassifiziert, so kann die genaue geometrische Form für das identifizierte Brillenmodell in einem geeigneten Datenformat aus einer Datenbank abgerufen werden. Dies ermöglicht es, eine verbesserte Posenermittlung mithilfe eines Mustererkennungsverfahrens basierend auf einem trainierten Posenerkennungsmodell und der konkreten geometrischen Form der Datenbrille, die sich aus der Zuordnung mithilfe der Datenbank ergeben hat, durchzuführen, da die genaue geometrische Form der betreffenden Datenbrille herstellerseitig vorgegeben ist und für das Mustererkennungsverfahren benutzt werden kann. Dadurch kann die Posenbestimmung einfacher und zuverlässiger durchgeführt werden.

Die mindestens eine Datenbrille kann mit einem Assistenzsystem in dem Fahrzeug in Kommunikationsverbindung stehen, wobei mithilfe eines Vergleichs der Bewegungen der erkannten mindestens einen Datenbrille und von Bewegungen der mindestens einen Datenbrille, die durch eine Brillenbewegungssensorik (6DoF-Beschleunigungssensorik, IMU-Sensorik) in den Datenbrillen erfasst wird, eine Zuordnung der jeweiligen mindestens einen Datenbrille zu einem entsprechenden Kommunikationskanal zu dem Assistenzsystem erfolgt, um die mindestens einen Datenbrille zu identifizieren.

Es kann vorgesehen sein, dass die Pose der mindestens einen Datenbrille über den zugeordneten Kommunikationskanal an die Datenbrille bereitgestellt wird.

Die Datenbrillen können über eine Kommunikationsverbindung bzw. einen Kommunikationskanal mit dem Assistenzsystem des Fahrzeugs verbunden sein. Diese ermöglicht es, durch Abgleich der Bewegungsinformationen eine Zuordnung des Brillenmodells der Datenbrille der bestimmten Datenbrille zu einem Sitzplatz zuzuordnen, so dass Funktionen für die Datenbrille abhängig vom Sitzplatz des jeweiligen Nutzers aktiviert, freigeschaltet oder blockiert werden können.

Die Verbindung der Verwendung einer einzigen Weitwinkel-Innenraumkamera mit der Möglichkeit der verbesserten Posenbestimmung durch zunächst die Typerkennung des Brillentyps, einer Zuordnung einer exakten geometrischen Form der Datenbrille und die anschließende Verwendung der exakten geometrischen Form des erkannten Brillenmodells ermöglicht eine genauere Posenbestimmung und ist gegenüber herkömmlichen Verfahren vorteilhaft, da der konstruktive Aufwand reduziert werden kann und die Genauigkeit der Posenerkennung erheblich verbessert werden kann, indem die Geometrien der Datenbrillen in Innenraum des Fahrzeugs von einer Datenbank von Brillentypen abgerufen werden können.

Gemäß einem weiteren Aspekt ist eine Vorrichtung, insbesondere Assistenzsystem, zum Outside-In-Tracking von mindestens einer Datenbrille in einem Innenraum eines Fahrzeugs zum Bestimmen der Brillenposen der mindestens einen Datenbrille, wobei die Vorrichtung ausgebildet ist zum:
- Erhalten oder Erfassen eines Kamerabilds des Innenraums, so dass Fahrzeuginsassen auf allen Sitzplätzen des Fahrzeugs erfasst werden,
- Auswerten des Kamerabilds mithilfe eines datenbasierten Brillenerkennungsmodell, um alle der mindestens einen Datenbrille in dem Innenraum zu erfassen, wobei das datenbasierte Brillenerkennungsmodell trainiert ist, um für jeden Sitzplatz einen Brillentyp zu erkennen, wenn ein auf dem Sitzplatz befindlicher Fahrzeuginsasse eine Datenbrille trägt,
- Bereitstellen von Geometriedaten der betreffenden mindestens einen Datenbrille, insbesondere von einer Datenbank, basierend auf dem Brillentyp;
- Bestimmen der jeweiligen Brillenpose der erkannten mindestens einen Datenbrille mithilfe eines datenbasierten oder merkmalsbasierten Posenerkennungsmodells abhängig von den jeweiligen Geometriedaten der erkannten mindestens einen Datenbrille (3); und
- Bereitstellen der bestimmten Brillenpose(n) an die jeweils erkannte mindestens eine Datenbrille.

Ausführungsformen werden nachfolgend anhand der beigefügten Zeichnungen näher erläutert. Es zeigen:
- Figur 1: eine schematische Darstellung eines Systems zum Outside-In-Tracken von mehreren Datenbrillen in einem Kraftfahrzeug;
- Figur 2: eine schematische Darstellung eines Kameraerfassungsbereichs zum Outside-In-Tracken von mehreren Datenbrillen in einem Innenraum eines Kraftfahrzeugs; und
- Figur 3: ein Flussdiagramm zur Veranschaulichung eines Verfahrens zum Betreiben des Systems zum Ermitteln von Posen von mehreren Datenbrillen in einem Innenraum eines Kraftfahrzeugs.

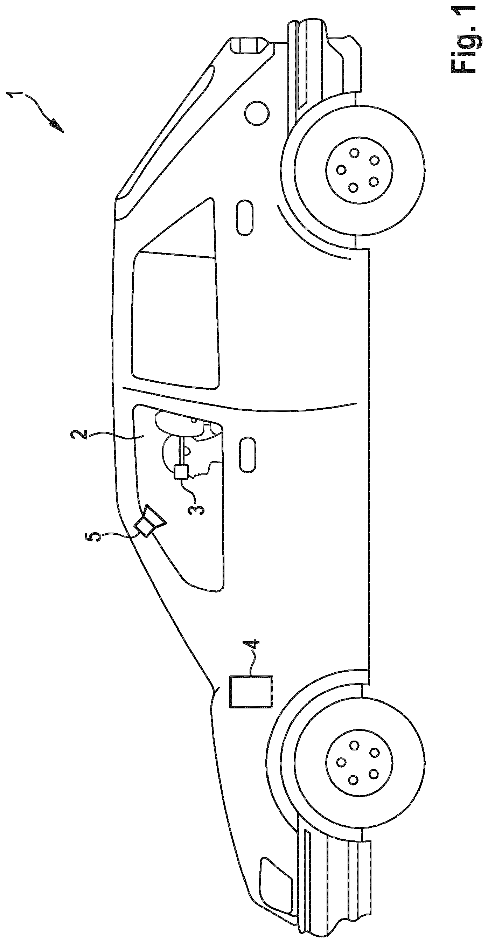

Figur 1 zeigt schematisch ein Kraftfahrzeug 1 mit einem Innenraum 2, in dem sich mehrere Fahrzeuginsassen befinden, die teilweise eine Datenbrille 3 tragen. Es ist ein System zum Outside-In-Tracking von einer oder mehreren Datenbrillen 3 in dem Innenraum 2 vorgesehen.

Das System umfasst ein Assistenzsystem 4, das mit einer Innenraumkamera 5 in Verbindung steht. Die Innenraumkamera 5 ist als Weitwinkelkamera ausgebildet, die die Eyeboxen, d. h. die Bereiche im Innenraum 2 des Fahrzeugs, in einem Kamerabild erfassen kann, in denen sich das Augenpaar des jeweiligen Fahrzeuginsassen mit hoher Wahrscheinlichkeit befindet, wenn dieser auf einem entsprechenden Sitzplatz im Fahrzeug sitzt.

Das Assistenzsystem 4 umfasst eine Datenverarbeitungseinrichtung zum Durchführen des nachfolgend beschriebenen Verfahrens.

Vorzugsweise ist die Innenraumkamera 5 am Dachhimmel vor der vorderen Sitzreihe angeordnet, insbesondere im Bereich des Innenrückspiegels, so dass eine vollständige Erfassung der Köpfe aller Fahrzeuginsassen möglich ist.

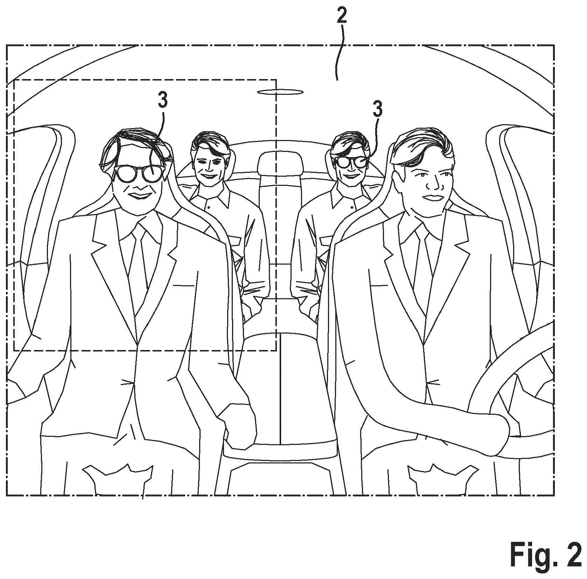

Figur 2 zeigt den Innenraum 2 aus Sicht der Innenraumkamera 5, wenn diese im Bereich des Rückspiegels angeordnet ist. Man erkennt beispielhaft mehrere Fahrzeuginsassen, von denen zwei der Fahrzeuginsassen Datenbrillen 3 unterschiedlicher Hersteller tragen.

Die Innenraumkamera 5 steht mit dem Assistenzsystem 4 in Kommunikationsverbindung, um ein Verfahren auszuführen, die Brillenposen einer oder mehrerer Datenbrillen 3 in verbesserter Weise zu bestimmen bzw. zu tracken.

Ferner können die Datenbrillen 3 mit dem Assistenzsystem 4 über eine drahtgebundene oder drahtlose Kommunikationsverbindung verbunden sein, so dass durch Abgleich einer Brillensensorik, beispielsweise einer IMU (Inertia Measurement Unit), und der erkannten Brillenpose eine Identifikation der mit dem Assistenzsystem 4 in Kommunikationsverbindung stehenden Datenbrille 3 und dem Sitzplatz des Nutzers der entsprechenden Datenbrille 3 möglich ist.

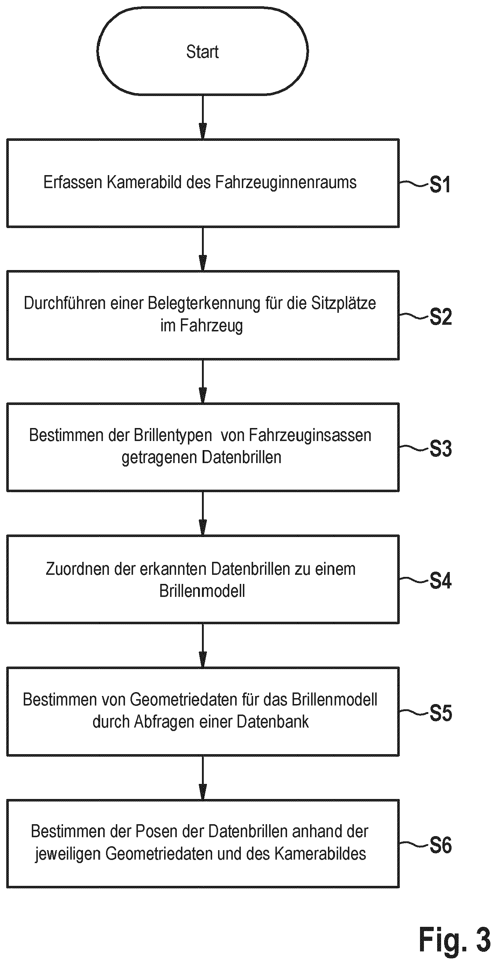

In Figur 3 ist ein Flussdiagramm zur Veranschaulichung des Verfahrens zum Betreiben des Systems dargestellt.

In Schritt S1 wird wie beispielhaft in Figur 2 dargestellt, zunächst ein Kamerabild mithilfe der Innenraumkamera 5 erfasst. Dieses Kamerabild zeigt den gesamten Fahrzeuginnenraum 2 mit den darin befindlichen Fahrzeuginsassen.

Zunächst wird in Schritt S2 das Kamerabild mithilfe eines geeigneten Mustererkennungsverfahren oder dergleichen analysiert, um zu erkennen, welcher der Sitzplätze durch Fahrzeuginsassen belegt ist. Das Mustererkennungsverfahren kann ein datenbasiertes Belegterkennungsmodell umfassen, das trainiert ist, zu erkennen, ob ein Sitzplatz belegt ist und welcher belegt ist. Das Belegterkennungsmodell kann beispielsweise als Klassifikationsmodell ausgebildet sein. Unter einem Modell wird hierin ein Rechenmodell verstanden, das in der Datenverarbeitungseinrichtung des Assistenzsystems 4 berechnet wird.

Anschließend wird in Schritt S3 anhand der als belegt erkannten Sitzplätze für jeden der als belegt erkannten Sitzplätze die Position einer Eyebox identifiziert, die als Suchbereich für ein nachfolgend durchgeführtes Mustererkennungsverfahren dient. Das Mustererkennungsverfahren kann ein datenbasiertes Brillenerkennungsmodell umfassen, das trainiert ist, um zu erkennen, ob der auf dem Sitzplatz befindliche Fahrzeuginsasse eine Datenbrille trägt oder nicht. Dieses Verfahren kann einfach ausgebildet sein, da lediglich die Erkennung des Vorhandenseins einer Datenbrille 3 erforderlich ist, nicht jedoch einer Ermittlung der Pose der Datenbrille 3 anhand einer unbekannten Brillenform. Das Brillenerkennungsmodell kann weiterhin trainiert sein, um den Brillentyp der erkannten Datenbrillen 3 zu erkennen.

In dem System sollen Nutzer frei erhältliche Datenbrillen 3 von verschiedenen Herstellern und in verschiedenen Ausprägungen nutzen können, deren Brillenform dem System nicht vorbekannt ist. Durch den eingeschränkten Suchbereich ist es möglich, die ungefähre geometrische Form und/oder die optische Erscheinung (z.B. Farbe) der Datenbrille 3 anhand der Erkennung des Brillentyps in einfacher Weise schnell zu ermitteln. Der in Schritt S3 erkannte Brillentyp kann nun in Schritt S4 einem entsprechenden Hersteller oder einem Brillenmodell zugeordnet werden.

Durch Abfrage einer Datenbank kann in Schritt S5 eine dem Brillenmodell zugeordnete Brillenform anhand von Geometriedaten, wie z. B. als CAD-Daten oder dergleichen, abgerufen werden. Die genaue Kenntnis der Geometriedaten ermöglicht nun eine verbesserte Auswertung des Kamerabilds zur Ermittlung der Pose der Datenbrille 3 mit erheblich verringertem Rechenaufwand.

Mithilfe eines datenbasierten Posenerkennungsmodell kann in Schritt S6 die Posenermittlung der Datenbrillen 3 anhand der Geometriedaten in dem zuvor ausgewählten Suchfenster, in dem die betreffende Datenbrille 3 erkannt worden ist, durchgeführt werden. Durch die Kenntnis der Geometriedaten kann die Erkennung der Datenbrille 3 erheblich vereinfacht werden, so dass sich der Verarbeitungsaufwand zur Auswertung des Posenerkennungsmodells reduziert.

Dazu kann das datenbasierte Posenerkennungsmodell für eine Objekterkennung und -klassifizierung trainiert sein. Zusätzlich kann ein solcher Algorithmus eine Segmentierung der Datenbrille 3 vornehmen und so eine Maske für den Suchradius erstellen. Insbesondere kann das datenbasierte Posenerkenungsmodell mit den Geometriedaten der Datenbrille 3 unter verschiedenen Posen der Datenbrille 3 trainiert werden. Weiterhin kann das Posenerkennungsmodell merkmals-basierte Methoden anwenden, bei denen Merkmale der Datenbrille 3 erkannt werden (z.B. Rahmendicke, Glasgröße, Form, etc.) und basierend auf dieser Detektion eine Posenermittlung durchführen. Die Merkmale können manuell oder (semi)automatische von den Geometriedaten der Datenbrille 3 abgeleitet werden.

Dadurch, dass die Datenbrille 3 drahtlos mit dem Assistenzsystem verbunden ist, ist in der Regel eine Zuordnung einer von mehreren optisch erkannten Datenbrillen 3 zu einem Sitzplatz bzw. einem entsprechenden Fahrzeuginsassen nicht ohne Weiteres möglich. Durch Abgleich der Bewegung der Datenbrille 3 durch das Outside-In Tracking-Verfahren mit sensorisch erfassten Daten Bewegungsdaten in der Datenbrille, wie beispielsweise mithilfe einer Beschleunigungssensorik (IMU) oder dergleichen, kann eine Zuordnung der betreffenden Datenbrille 3, d.h. der Kommunikationsverbindung einer Datenbrille 3 zu einem Sitzplatz bzw. einem Fahrzeuginsassen erfolgen, um so entsprechend Funktionen der Datenbrille 3 zu aktivieren, freizuschalten oder zu blockieren. Das Erkennen der Zuordnung erfolgt durch Vergleich der durch die Brillensensorik erfassten Bewegung der Datenbrille 3 und der Abfolge der durch die Auswertung des Kamerabilds erfassten Posen/Bewegung der Datenbrille 3.

Beispielsweise können so bei Nutzung einer Datenbrille 3 durch den Fahrer des Kraftfahrzeugs fahrzeug- und fahrspezifische Informationen angezeigt werden und Medieninhalte blockiert werden (zumindest während der Fahrt). Andererseits können für Fahrzeuginsassen, die nicht dem Fahrer entsprechen, Medieninhalte freigegeben werden und die Anzeige von fahrzeug- und fahrtrelevanten Informationen deaktiviert werden.

In Schritt S7 wird die bestimmte Brillenpose an die jeweils erkannte Datenbrille 3 übermittelt.

### Bezugszeichenliste

- 1: Kraftfahrzeug
- 2: Innenraum
- 3: Datenbrille
- 4: Assistenzsystem
- 5: Innenraumkamera

## Patentansprüche

1. Computer-implementiertes Verfahren, zum Outside-In-Tracking von mindestens einer Datenbrille (3) in einem Innenraum (2) eines Fahrzeugs (1) zum Bestimmen der Brillenposen der mindestens einen Datenbrille (3), umfassend:
- Erfassen (S1) eines Kamerabilds des Innenraums, so dass Fahrzeuginsassen auf allen Sitzplätzen des Fahrzeugs erfasst werden,
- Auswerten (S2) des Kamerabilds mithilfe eines datenbasierten Brillenerkennungsmodells, um alle der mindestens einen Datenbrille (3) in dem Innenraum (2) zu erfassen, wobei das datenbasierte Brillenerkennungsmodell trainiert ist, um für jeden Sitzplatz einen Brillentyp zu erkennen, wenn ein auf dem Sitzplatz befindlicher Fahrzeuginsasse eine Datenbrille (3) trägt;
- Bereitstellen von Geometriedaten der betreffenden mindestens einen Datenbrille (3), insbesondere von einer Datenbank, basierend auf dem Brillentyp;
- Bestimmen (S6) der jeweiligen Brillenpose der erkannten mindestens einen Datenbrille (3) mithilfe eines datenbasierten oder merkmalsbasierten Posenerkennungsmodells abhängig von den jeweiligen Geometriedaten der erkannten mindestens einen Datenbrille (3);
- Bereitstellen (S7) der bestimmten Brillenpose(n) an die jeweils erkannte mindestens eine Datenbrille (3).

2. Verfahren nach Anspruch 1, wobei die mindestens eine Datenbrille (3) mit einem Assistenzsystem (4) in dem Fahrzeug (1) in Kommunikationsverbindung steht, wobei mithilfe eines Vergleichs der Bewegungen der erkannten mindestens einen Datenbrille (3) und von Bewegungen der mindestens einen Datenbrille (3), die durch eine Brillenbewegungssensorik in den Datenbrillen (3) erfasst wird, eine Zuordnung der jeweiligen mindestens einen Datenbrille (3) zu einem entsprechenden Kommunikationskanal zu dem Assistenzsystem (4) erfolgt, um die mindestens einen Datenbrille (3) zu identifizieren.

3. Verfahren nach Anspruch 2, wobei die Pose der mindestens einen Datenbrille (3) über den zugeordneten Kommunikationskanal an die Datenbrille (3) bereitgestellt wird.

4. Vorrichtung, insbesondere Assistenzsystem (4), zum Outside-In-Tracking von mindestens einer Datenbrille (3) in einem Innenraum (2) eines Fahrzeugs (1) zum Bestimmen der Brillenposen der mindestens einen Datenbrille (3), umfassend:
- eine Innenraumkamera, die ausgebildet ist, um ein Kamerabild des Innenraums zu erfassen, so dass Fahrzeuginsassen auf allen Sitzplätzen des Fahrzeugs erfasst werden,
- ein computer-implementiertes Assistenzsystem, das ausgebildet ist, um
∘ das Kamerabild mithilfe eines datenbasierten Brillenerkennungsmodell auszuwerten, um alle der mindestens einen Datenbrille (3) in dem Innenraum (2) zu erfassen, wobei das datenbasierte Brillenerkennungsmodell trainiert ist, um für jeden Sitzplatz einen Brillentyp zu erkennen, wenn ein auf dem Sitzplatz befindlicher Fahrzeuginsasse eine Datenbrille (3) trägt;
∘ Geometriedaten der betreffenden mindestens einen Datenbrille (3), insbesondere von einer Datenbank, basierend auf dem Brillentyp bereitzustellen;
∘ die jeweilige Brillenpose der erkannten mindestens einen Datenbrille (3) mithilfe eines datenbasierten oder merkmalsbasierten Posenerkennungsmodells abhängig von den jeweiligen Geometriedaten der erkannten mindestens einen Datenbrille (3) zu bestimmen;
∘ die jeweils bestimmte Brillenpose an die jeweils erkannte mindestens eine Datenbrille (3) bereitzustellen.

5. System mit einer Vorrichtung nach Anspruch 4 und mindestens einer Datenbrille.

## Claims

1. Computer-implemented method for outside-in tracking of at least one data glasses (3) in an interior (2) of a vehicle (1) for determining the glasses poses of the at least one data glasses (3), comprising:
∘ acquiring (S1) a camera image of the interior, such that vehicle occupants on all seats of the vehicle are acquired,
∘ evaluating (S2) the camera image by means of a data-based glasses recognition model in order to acquire all of the at least one data glasses (3) in the interior (2), wherein the data-based glasses recognition model is trained to recognize a glasses type for each seat when a vehicle occupant located on the seat wears data glasses (3);
∘ providing geometry data of the respective at least one data glasses (3), in particular from a database, based on the glasses type;
∘ determining (S6) the respective glasses pose of the recognized at least one data glasses (3) by means of a data-based or feature-based pose recognition model depending on the respective geometry data of the recognized at least one data glasses (3);
∘ providing (S7) the determined glasses pose(s) to the respectively recognized at least one data glasses (3).

2. Method according to claim 1, wherein the at least one data glasses (3) is in communication connection with an assistance system (4) in the vehicle (1), wherein by means of a comparison of the movements of the recognized at least one data glasses (3) and of movements of the at least one data glasses (3), which is acquired by glasses movement sensors in the data glasses (3), an assignment of the respective at least one data glasses (3) to a corresponding communication channel to the assistance system (4) is carried out in order to identify the at least one data glasses (3).

3. Method according to claim 2, wherein the pose of the at least one data glasses (3) is provided to the data glasses (3) via the assigned communication channel.

4. Device, in particular assistance system (4), for outside-in tracking of at least one data glasses (3) in an interior (2) of a vehicle (1) for determining the glasses poses of the at least one data glasses (3), comprising:
∘ an interior camera, which is designed to acquire a camera image of the interior, such that vehicle occupants on all seats of the vehicle are acquired,
∘ a computer-implemented assistance system, which is designed to
▪ evaluate the camera image by means of a data-based glasses recognition model in order to acquire all of the at least one data glasses (3) in the interior (2), wherein the data-based glasses recognition model is trained to recognize a glasses type for each seat when a vehicle occupant located on the seat wears data glasses (3);
▪ provide geometry data of the respective at least one data glasses (3), in particular from a database, based on the glasses type;
▪ determine the respective glasses pose of the recognized at least one data glasses (3) by means of a data-based or feature-based pose recognition model depending on the respective geometry data of the recognized at least one data glasses (3);
▪ provide the respectively determined glasses pose to the respectively recognized at least one data glasses (3).

5. System with a device according to claim 4 and at least one data glasses.

## Revendications

1. Procédé mis en œuvre par ordinateur pour le suivi outside-in d'au moins des lunettes de données (3) dans un espace intérieur (2) d'un véhicule (1) pour déterminer les poses de lunettes des au moins lunettes de données (3), comprenant :
∘ l'acquisition (S1) d'une image de caméra de l'espace intérieur, de sorte que les occupants du véhicule sur tous les sièges du véhicule sont acquis,
∘ l'évaluation (S2) de l'image de caméra à l'aide d'un modèle de reconnaissance de lunettes basé sur des données, afin d'acquérir toutes les au moins lunettes de données (3) dans l'espace intérieur (2), le modèle de reconnaissance de lunettes basé sur des données étant entraîné pour reconnaître un type de lunettes pour chaque siège lorsqu'un occupant du véhicule se trouvant sur le siège porte des lunettes de données (3) ;
∘ la fourniture de données de géométrie des au moins lunettes de données (3) concernées, en particulier à partir d'une base de données, sur la base du type de lunettes ;
∘ la détermination (S6) de la pose de lunettes respective des au moins lunettes de données (3) reconnues à l'aide d'un modèle de reconnaissance de pose basé sur des données ou basé sur des caractéristiques en fonction des données de géométrie respectives des au moins lunettes de données (3) reconnues ;
∘ la fourniture (S7) de la ou des poses de lunettes déterminées aux au moins lunettes de données (3) respectivement reconnues.

2. Procédé selon la revendication 1, dans lequel les au moins lunettes de données (3) sont en liaison de communication avec un système d'assistance (4) dans le véhicule (1), une attribution des au moins lunettes de données (3) respectives à un canal de communication correspondant vers le système d'assistance (4) étant effectuée à l'aide d'une comparaison des mouvements des au moins lunettes de données (3) reconnues et de mouvements des au moins lunettes de données (3), qui est acquis par des capteurs de mouvement de lunettes dans les lunettes de données (3), afin d'identifier les au moins lunettes de données (3).

3. Procédé selon la revendication 2, dans lequel la pose des au moins lunettes de données (3) est fournie aux lunettes de données (3) via le canal de communication attribué.

4. Dispositif, en particulier système d'assistance (4), pour le suivi outside-in d'au moins des lunettes de données (3) dans un espace intérieur (2) d'un véhicule (1) pour déterminer les poses de lunettes des au moins lunettes de données (3), comprenant :
∘ une caméra d'espace intérieur, qui est conçue pour acquérir une image de caméra de l'espace intérieur, de sorte que les occupants du véhicule sur tous les sièges du véhicule sont acquis,
∘ un système d'assistance mis en œuvre par ordinateur, qui est conçu pour
▪ évaluer l'image de caméra à l'aide d'un modèle de reconnaissance de lunettes basé sur des données, afin d'acquérir toutes les au moins lunettes de données (3) dans l'espace intérieur (2), le modèle de reconnaissance de lunettes basé sur des données étant entraîné pour reconnaître un type de lunettes pour chaque siège lorsqu'un occupant du véhicule se trouvant sur le siège porte des lunettes de données (3) ;
▪ fournir des données de géométrie des au moins lunettes de données (3) concernées, en particulier à partir d'une base de données, sur la base du type de lunettes ;
▪ déterminer la pose de lunettes respective des au moins lunettes de données (3) reconnues à l'aide d'un modèle de reconnaissance de pose basé sur des données ou basé sur des caractéristiques en fonction des données de géométrie respectives des au moins lunettes de données (3) reconnues ;
▪ fournir la pose de lunettes respectivement déterminée aux au moins lunettes de données (3) respectivement reconnues.

5. Système comportant un dispositif selon la revendication 4 et au moins des lunettes de données.
